# EUROPEAN PATENT APPLICATION

(11) **EP 0 622 752 A2**
(43) Date of publication of application: **02.11.1994**
(21) Application number: 94420122.7
(22) Date of filing: 19.04.1994
(51) Int. Cl.: G06K 9/68, G06K 9/72

(54) **Apparatus and method for a lexical post-processor for a neural network-based character processor**

(30) Priority: 30.04.1993 US 56705
(71) Applicant: EASTMAN KODAK COMPANY, Rochester, New York 14650-2201 (US)
(72) Inventor: Garrison, Laurie Frances, c/o Eastman Kodak Comp., Rochester, New York 14650-2201 (US); Gaborski, Roger Stephen, c/o Eastman Kodak Comp., Rochester, New York 14650-2201 (US)
(74) Representative: Buff, Michel

(57) **Abstract**

In a neural network-based character processor, a neural network identifies characters to be included in textual material using a lexicon to improve recognition performance. Using the vector confidence level quantities associated with characters from the neural network, lexicon entries are searched using a selected number of most likely characters at character positions in the lexicon entries associated with the character positions of the neural network word. As a result of this search for a predetermined number of character positions, a candidate word list is established along with the vector quantities defining the confidence level of the character being correct. At character positions following the predetermined number of character positions, the candidate list and not the lexicon is searched, the candidate list being shortened by a limited coincidence between the most likely characters of the neural network work and the characters of the lexicon words. When the neural network word has been completely processed, then, in the absence of any candidate words, the neural network word is selected. Similarly, when the neural network word is in the candidate list, then the neural network word is selected. Finally, only when the best candidate from the candidate list has a sufficiently high total confidence level, relative to the neural network word, of being correct is the candidate list word selected.

## Description

### Field of Invention

This invention relates generally to the processing of character information derived from a neural network such as an optical character recognition system and, more particularly, to a technique for improving the accuracy of the word selected by the post-processing of the character information for inclusion in the resulting text materials.

### Background of the Invention

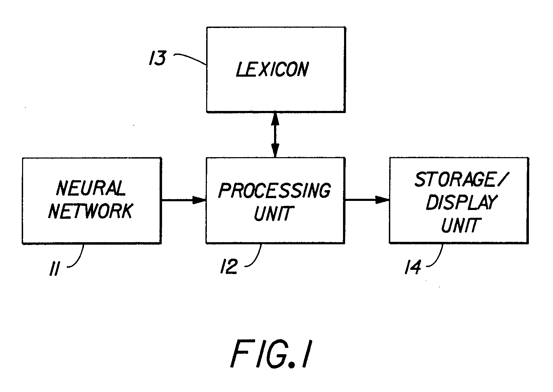

In the related art, a lexical post-processing technique has been used to improve the performance of optical character recognition procedures. Referring to Fig. 1, a neural network 11, such as an optical character recognition device, provides a series of character activation vectors to the processing unit 12. Each character activation vector includes (numerical) confidence level fields on the relative confidence levels of the identity of the character associated with each vector field supplied by the neural network. The processing unit 12 can be a general or a special purpose computer with appropriate hardware and associated software (including firmware) programs to process and to manipulate the character activation vectors and to process entries from associated memories in accordance with currently executing software programs. Based on the character activation vectors, the processing unit compares the sequence of characters, character by character from the neural network, with words stored in a lexicon 13. The lexicon can be, for example, a group of words used for the spell checking operation in word processing procedures and can be stored in a memory unit to which the processing unit has access. Various algorithms have been developed which correct for neural network errors such as substitutions, insertions, and deletions. As a result of the comparison between the character activation vectors and the lexicon entries, a best match character group or word is found between the stored entries in the lexicon and the character sequence identified by the neural network. The best match character group is transferred to the storage/display unit 14 where the character group becomes part of the text material which is the output of the system.

A problem with this procedure for identifying the best match character group is that when the input character group is not in the lexicon, the system will incorrectly select the closest match in the lexicon without determining whether the most probable word as determined by the character group vectors from the neural network is the best selection.

A need has been felt for a procedure whereby a sequence of characters or a word identified by the neural network can be selected as the best text entry when compared to the closest match with the lexicon entries.

### Summary of the Invention

The present invention is directed to overcoming one or more of the problems set forth above. Briefly summarized, according to one aspect of the present invention, each character from the neural network is transferred sequentially in the form of character activation vectors to a processing unit. Based on the character activation vectors, each character received from the neural network has associated therewith a group of characters having various confidence levels of the actual identity of the character from the neural network. The characters with the highest confidence levels as determined by the neural network are used to search a lexicon. When a lexicon entry has one of the (two) most probable characters in a selected range of word positions, the lexical entry is stored along with the confidence rating of the character. At the end of processing a sequence of character activation vectors, the confidence ratings for each character of the lexical entries (or words) selected by the character by character search are added together and divided by the number of hypothesized characters to provide a lexicon confidence rating for each word. The lexicon entry with the highest confidence rating is then selected. The confidence rating of the selected lexicon entry is then compared with a confidence rating for the character sequence generated by the neural network. The lexicon word is chosen as long as the difference between the lexicon word and the neural network word is above a threshold value, i.e., the neural network work in the default word. In order to expedite the processing of the neural network words, each time a word is selected from the lexicon, the selected word is added to a candidate list. After the processing of a predetermined number of neural network characters, the remaining characters from the neural network are used to search the candidate list and not the complete lexicon. The searches of the candidate list by the remaining neural network characters are used to shorten the candidate list. In this manner, the processing time for selection of the most probable text word is significantly reduced.

This procedure advantageously provides a technique for determining when a character sequence provided by a neural network should be used directly and not replaced by a lexical entry. In addition, the procedure can be run on-line, permitting the introduction of text material at normal hand printing rates, or can be run off-line. The procedure can also employ a flexible comparison algorithm.

These and other aspects, objects, features and advantages of the present invention will be more clearly understood and appreciated from a review of the following detailed description of the preferred embodiments and appended claims, and be reference to the accompanying drawings.

### Brief Description of the Drawings

Figure 1 a block diagram is optical character recognition system capable of advantageously using the present invention.

Figure 2 is a flow diagram of the technique for processing optical character information according to the present invention.

### Detailed Description of the Invention

Fig. 1 has been discussed with respect to the background of the invention.

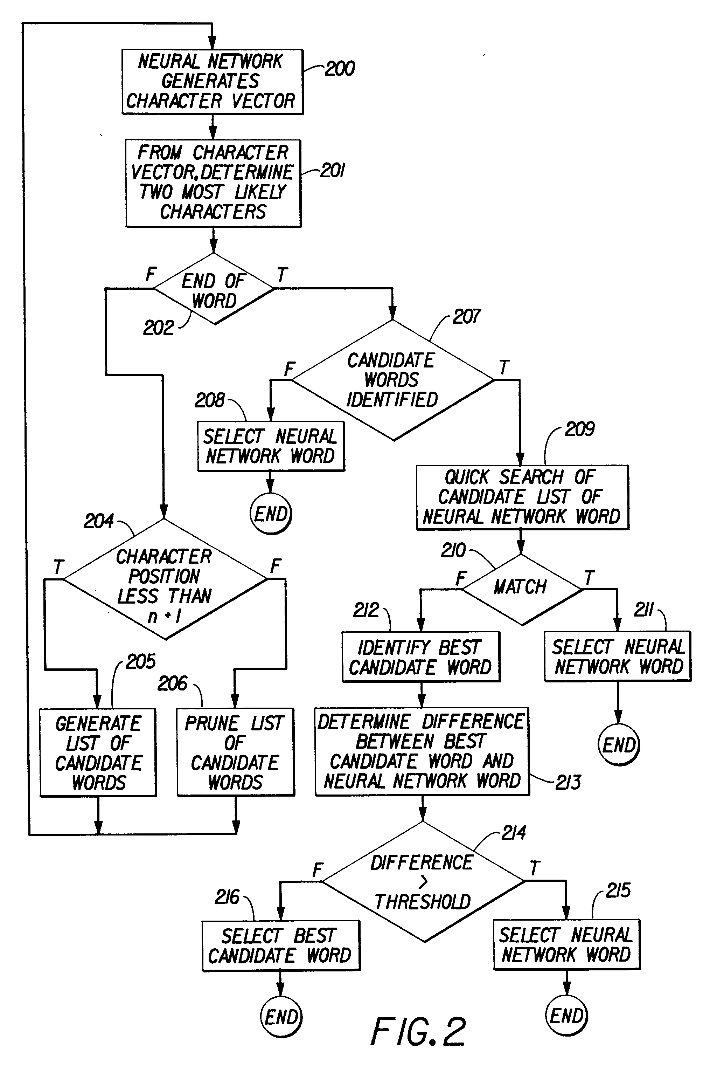

Referring to Fig. 2, a flow diagram of the procedure for selecting a word based on the character activation vectors from a neural network is shown. In step 200, the character activation vector is transferred from the neural network to a processing unit. In step 201, the vector is sorted by the neural network activation levels to obtain the (two) most probable characters, i.e., the (two) characters which are the most probable text characters from the neural network. The highest activated character is checked, in step 202, to determine whether this is an end of word character such as a space, period, or other punctuation mark. In the preferred embodiment, the algorithm used to determine when the end of word character is present is adapted to the particular performance of the neural network by consideration of the confusion matrix of that neural network. In the neural network with which the present procedure was implemented, substitution errors for spaces were rare and the procedure has a relatively high confidence level that a space had been correctly identified. However, the neural network would occasionally substitute a space for an apostrophe. The procedure was implemented to determine, when an apostrophe is detected, whether the character with the second highest probability is a space. When the second choice is a space character, the end of the word is assumed. If the second highest probability character is an alpha/numeric character, then the first choice of the procedure is an apostrophe and the processing continues. As will be clear to those skilled in the art, the confusion matrix information can be added to the processing of all the characters by this procedure. When the procedure determines that the neural network character does not identify an end of a word character, a procedure is implemented to provide a candidate list from the lexical candidates. In step 204, a determination is made whether the current character from the neural network has word position less than a preselected number n. When the character position is less than n, a list of candidate words is generated in step 205. The list of candidate words is generated in the following manner. For each of the (two) characters with the highest confidence level, the lexicon is searched for a possible character match in each of list of words in the lexicon in a word position related to the character position in the neural network word. Only those lexical entries with a length within a certain threshold are considered as possible candidate characters. The neural network character is first compared to the character in the current position to determine whether a character match is present. If the current position does not produce a character match, then the surrounding positions, i.e., the position before and the position following the position of the character in the neural network word are checked for a character match according to one embodiment. All lexical entries in which a match is found are added to a candidate list, and the confidence levels from the associated character vector are stored along with the candidate list. When a match is found, but not in the expected position, a penalty in the form of a lowered confidence level is stored with the lexical entry added to the candidate list.

After the first n character positions have been processed, the assumption is made that all the possible words are in the candidate list and a search of the entire lexicon is no longer required. For the n+1 position and succeeding character positions, step 204 selects step 206. In step 206, the entries in the candidate list are compared with the two highest probability neural network characters in the appropriate positions. When a match is found, the associated vector confidence level is added to the entry in the candidate list. The candidate list is reduced (pruned) by eliminating entries which have only a small number of matching characters or for which combined activation levels are below a threshold. That is, all of the confidence levels are summed and then divided by the number of hypothesized characters in the word on the candidate list to provide a word confidence level. In addition, the list can be shortened by eliminating words which are too short or too long.

When in step 203, an end of word character is identified, then a determination is made, in step 207, whether the candidate list includes at least one entry. When the candidate list does not include at least one entry, then, in step 208, the group of characters from the neural network is selected as the next word in the text. When a list is present is step 207, then a quick-search is made of the candidate list to determine whether the candidate list includes the most probable neural network character group in step 209, the most probable neural network character group or word being the group of characters with the highest confidence level at each position. When the candidate list is determined to include the neural network word in step 210, then the neural network word is selected as the next word in the text.

When the quick-search does not find the neural network word in the candidate list, then, in a step not shown, one final shortening of the candidate list is performed to eliminate any unlikely candidate words. For the remaining list of candidate words, the differences between the vector character confidence levels of the most probable neural network word and the candidate list lexicon entry vector probability quantities (including penalties) are determined in step 213. In step 214, a determination is made whether the difference between the most probable word from the candidate list and the most probable neural network word is greater than a preselected threshold. When the difference is less than a preselected threshold, then the neural network word is selected for inclusion in the text in step 215. When the difference exceeds the preselected threshold, then the most probable word from the candidate list is selected for inclusion in the text in step 216.

It will be now appreciated that there has been presented a technique for processing character vector quantities from a neural network with a lexicon. The technique uses the neural network word as the default word and requires a minimum preselected confidence level for a lexical entry to replace the neural network word. In addition, when the lexical entries are too long or too short, then these entries are also eliminated from use in the text. The present technique for processing characters from a neural network can be performed on-line or off-line in a data processing system. The on-line neural network processing, in which the neural net characters are processed in real time, is made possible by the generation of a candidate list from the first group of neural network characters and then using the remaining characters to remove unlikely entries from the candidate list. Because the entire lexicon list does not have to accessed after the first few characters, the processing time is greatly reduced. When the neural network characters are processed off-line, the entire neural net word is available for comparison with the lexicon word list and this search is performed first. The presence of the neural network word in the lexicon eliminates further processing.

Operation of the present invention is believed to be apparent from the foregoing description and drawings, but a few words will be added for emphasis. The procedure processes the characters from the neural network character by character. The procedure is able to process handwritten information at normal input rates. The procedure can run on a word basis in an off-line mode. The procedure is adapted to correct for the typical neural network (i.e., optical character recognition) errors, specifically, the correction of substitutions can be accommodated because the procedure takes account not only word level information, but also takes account of the second choice of the neural network lexical entry procedure. According to one implementation of the processing procedure, the procedure can recover from two insertion errors or two deletion errors per word. Finally, the system does not rely on the neural network character group being in the lexicon, but the procedure has a technique for selecting between the neural network character group and the lexical entries. Most procedures require that the lexicon include all the words which can be used and therefore can have a limited vocabulary. In the present procedure, the procedure can recover when a suitable match can not be found in the lexicon. This flexibility is particularly useful when the entry of proper names into the neural network is expected. Similarly, the procedure permits the use of relatively small lexicons.

Some of the principal advantages of this procedure are: 1) the procedure can be used with a small lexicon, 2) the procedure requires minimal computation to implement and is therefore relatively efficient, 3) the procedure can correct for insertion, deletion and substitution errors, and 4) the neural network post-processing word accuracy is improved by 4% to 5%.

While the invention has been described with particular reference to a preferred embodiment, it will be understood by those skilled in the art that various changes may be made and equivalents may be substituted for elements of the preferred embodiment without departing from invention. In addition, many modifications may be made to adapt a particular situation and material to a teaching of the invention without departing from the essential teachings of the present invention.

As is evident from the foregoing description, certain aspects of the invention are not limited to the particular details of the examples illustrated, and it is therefore contemplated that other modifications and applications will occur to those skilled in the art. It is accordingly intended that the claims shall cover all such modifications and applications as do not depart from the true spirit and scope of the invention.

The invention is summarized as follows :
1. A method for post-processing character groups from a neural network to obtain a text word, said neural network providing a group of vector activations, each vector activation indicating a confidence level for associating a neural network character with each of a predetermined group of text characters, said method comprising the steps of:
   determining when a current character from a neural network identifies an end of word neural network character;
   when said current character is not an end of word character, providing a candidate list of words in which said current character has been compared with characters in lexical entries having a character position in said lexical entry related to a current character position of a character from a group of characters from said neural network, wherein a confidence level is stored with each word in said candidate list for each neural network word character position;
   when said end of word current character is identified, comparing the most probable neural network word identified by neural network character vectors with said candidate list and when said comparison is positive, selecting said neural network word to be said text word;
   when said most probable neural network word is not in said candidate list, calculating a difference between a cumulative confidence level of a most probable candidate word from said candidate list and a cumulative confidence level of said most probable neural network word;
   when said difference is less than a predetermined value, selecting said neural network road; and
   when said difference is greater than said predetermined value, selecting said most probable candidate word.
2. The method of 1 wherein when said post-processing of said neural network character groups is performed in a processing unit in an off-line mode, a step of comparing said most probable neural network word with said lexicon entries is performed prior to said providing a candidate list step, an identification of a match between said most probable neural network word and a one of said lexicon entries causing said most probable neural network word to be selected as said text word.
3. The method of 1 wherein a predetermined number of current characters are compared with characters in lexical entries having a character position in said lexical entry related to a current character position of a current character from a group of characters from said neural network, the method further comprising a step of, after said predetermined number of current characters have been compared, comparing additional current characters from said neural network with associated positions of entries in said candidate list.
4. The method of 1 further comprising a step of:
   when no words are found in a candidate list at an end of word character, selecting said most probable neural network word to be said text word.
5. The method of 1 wherein in said providing a candidate list, a character position in said lexical entry related to a current character position of a character from a group of characters from said neural network includes neighboring characters of said lexical entries.
6. Character processing apparatus for post-processing characters of a neural network, said neural network providing character vectors which include confidence levels for an available text character set, said apparatus comprising:
   a neural network for providing character vectors which include confidence levels for available characters;
   a lexicon having list of entries in the form of character groups; and
   processing means for receiving said character vectors from said neural network and for retrieving entries from said lexicon, wherein said processing means includes hardware/software means for performing the steps of 1.
7. The character processing apparatus of 6 wherein said hardware/software means can perform the step of 2.
8. The character processing apparatus of 6 wherein said hardware/software means can perform the step of 3.
9. The character processing apparatus of 6 wherein said hardware/software means can perform the step of 5.
10. A method for processing a word of characters from a neural network, said neural network characters having vector quantities associated therewith identifying the confidence level of the correct identity of the associated neural network character, said method comprising the steps of:
   determining the most probable characters of the associated neural network character from said vector quantities;
   for a selected number of current characters in neural network word positions, generating a candidate list by comparing said most probable neural network characters with characters in associated positions in lexicon entries, wherein said candidate list includes vector quantities associated with each word in said candidate list;
   for characters following said selected number of character positions, using said most probable characters to compare with associated position for words in said candidate list;
   compare with associated position for words in said candidate list;
   at the completion of neural network word, selecting said neural network word for the text when no entries are present in the candidate list;
   selecting said neural network word when said neural network word is in said candidate list;
   selecting a best candidate from said candidate list when said best candidate word has a within threshold then said neural network word; and
   otherwise, selecting said neural network word.
11. The method of 10 further comprising the steps of:
   when said processing is performed off-line, immediately determining whether the neural network word is a lexicon entry; and
   selecting said neural network word when said neural network word is a lexicon entry.
12. The method of 10 wherein said generating a candidate list includes the steps of:
   comparing most probable neural network characters with lexical entry characters in the same and in surrounding lexicon word positions; and
   penalizing stored confidence levels for lexical entry characters which are not in the same character position.
13. The method of 10 further comprising a step of, when an end of word character is identified in said neural network position and no entries are found in said candidate list, selecting said most probable neural network word as said text word.
14. The method of 10 wherein in said generating step, said associated positions include neighboring positions relative to said neural network word.

## Claims

1. A method for post-processing character groups from a neural network to obtain a text word, said neural network providing a group of vector activations, each vector activation indicating a confidence level for associating a neural network character with each of a predetermined group of text characters, said method comprising the steps of:
determining when a current character from a neural network identifies an end of word neural network character;
when said current character is not an end of word character, providing a candidate list of words in which said current character has been compared with characters in lexical entries having a character position in said lexical entry related to a current character position of a character from a group of characters from said neural network, wherein a confidence level is stored with each word in said candidate list for each neural network word character position;
when said end of word current character is identified, comparing the most probable neural network word identified by neural network character vectors with said candidate list and when said comparison is positive, selecting said neural network word to be said text word;
when said most probable neural network word is not in said candidate list, calculating a difference between a cumulative confidence level of a most probable candidate word from said candidate list and a cumulative confidence level of said most probable neural network word;
when said difference is less than a predetermined value, selecting said neural network road; and
when said difference is greater than said predetermined value, selecting said most probable candidate word.

2. The method of claim 1 wherein when said post-processing of said neural network character groups is performed in a processing unit in an off-line mode, a step of comparing said most probable neural network word with said lexicon entries is performed prior to said providing a candidate list step, an identification of a match between said most probable neural network word and a one of said lexicon entries causing said most probable neural network word to be selected as said text word.

3. The method of claim 1 wherein a predetermined number of current characters are compared with characters in lexical entries having a character position in said lexical entry related to a current character position of a current character from a group of characters from said neural network, the method further comprising a step of, after said predetermined number of current characters have been compared, comparing additional current characters from said neural network with associated positions of entries in said candidate list.

4. The method of claim 1 further comprising a step of:
when no words are found in a candidate list at an end of word character, selecting said most probable neural network word to be said text word.

5. The method of claim 1 wherein in said providing a candidate list, a character position in said lexical entry related to a current character position of a character from a group of characters from said neural network includes neighboring characters of said lexical entries.

6. Character processing apparatus for post-processing characters of a neural network, said neural network providing character vectors which include confidence levels for an available text character set, said apparatus comprising:
a neural network for providing character vectors which include confidence levels for available characters;
a lexicon having list of entries in the form of character groups; and
processing means for receiving said character vectors from said neural network and for retrieving entries from said lexicon, wherein said processing means includes hardware/software means for performing the steps of claim 1.

7. A method for processing a word of characters from a neural network, said neural network characters having vector quantities associated therewith identifying the confidence level of the correct identity of the associated neural network character, said method comprising the steps of:
determining the most probable characters of the associated neural network character from said vector quantities;
for a selected number of current characters in neural network word positions, generating a candidate list by comparing said most probable neural network characters with characters in associated positions in lexicon entries, wherein said candidate list includes vector quantities associated with each word in said candidate list;
for characters following said selected number of character positions, using said most probable characters to compare with associated position for words in said candidate list;
at the completion of neural network word, selecting said neural network word for the text when no entries are present in the candidate list;
selecting said neural network word when said neural network word is in said candidate list;
selecting a best candidate from said candidate list when said best candidate word has a within threshold then said neural network word; and
otherwise, selecting said neural network word.

8. The method of claim 7 further comprising the steps of:
when said processing is performed off-line, immediately determining whether the neural network word is a lexicon entry; and
selecting said neural network word when said neural network word is a lexicon entry.

9. The method of claim 7 wherein said generating a candidate list includes the steps of:
comparing most probable neural network characters with lexical entry characters in the same and in surrounding lexicon word positions; and
penalizing stored confidence levels for lexical entry characters which are not in the same character position.

10. The method of claim 7 further comprising a step of, when an end of word character is identified in said neural network position and no entries are found in said candidate list, selecting said most probable neural network word as said text word.
